Europäisches Patentamt

**European Patent Office**

**Office européen des brevets**

(19)

(11) Publication number: **0 053 840**
**A1**

(12) **EUROPEAN PATENT APPLICATION**

(21) Application number: **81110278.9**

(22) Date of filing: **09.12.81**

(51) Int. Cl.³: **F 24 J 3/02**
**G 02 B 3/08**

(30) Priority: **10.12.80 PH 2497780**

(43) Date of publication of application:
**16.06.82 Bulletin 82/24**

(84) Designated Contracting States:
**AT BE CH DE FR IT LI LU NL SE**

(71) Applicant: **Anos, Alfredo M.**
**no. 6 Anak Bayan San Francisco del Monte**
**Quezon City Metro Manilla(PH)**

(72) Inventor: **Anos, Alfredo M.**
**no. 6 Anak Bayan San Francisco del Monte**
**Quezon City Metro Manilla(PH)**

(74) Representative: **May, Hans Ulrich**
**Thierschstrasse 27**
**D-8000 München 22(DE)**

(54) **Solar energy concentrator.**

(57) In the linear type embodiment of this invention, the solar energy concentrator (1) consists of a plurality of horizontally disposed and laterally arranged narrow inclined strips (2) extending outwardly from both sides of a narrow middle strip (3). These plurality of inclined strips have highly reflective polished finish surfaces or coatings (5), and each having a predetermined angle or inclination with the reflective surfaces adapted to reflect multifocally solar energy to a line above the narrow intermediate strip S. As shown there are two groups A and B of said narrow inclined areas disposed on both sides of the intermediate area I and facing towards the intermediate strip S. In other embodiments, the strips may form concentric strips, or sets of concentric arcs which reflect the solar energy towards one or several points above the center of the strips.

FIG.I

FIG.2

EP 0 053 840 A1

0053840

- 1 -

## SOLAR ENERGY CONCENTRATOR

This invention relates generally to devices used for effectively utilizing solar energy and more particularly to a highly efficient multifocal solar energy concentrator which could be manufactured at costs substantially lower than present solar energy concentrators.

Present researches throughout the world are directed to the development of new types of solar collectors and concentrators with higher efficiencies, such as for example solar collectors or concentrators capable of producing high temperatures. However, for these types of solar devices to gain the acceptance of the end users these devices must be simple and of low cost.

In the attempt to develop highly efficient solar devices, some have developed practical devices, such as the parabolic dish collector, the cylindrical parabolic collector, the heliostat, the fresnel lens of optical grade acrylic and many other sophisticated electronic devices for tracking the sun. All the above mentioned devices are costly, complicated and difficult to manufacture.

The object then of this invention is to provide a highly efficient multifocal solar energy concentrator which is very simple, easy to install and which could be manufactured at a considerably much lower costs than present solar devices of the same nature, and which could also be adopted or used in parabolic cylindrical heliostats and other types of solar energy concentrator.

More specifically, the object of this invention is to provide a low cost but highly efficient horizontal and lateral type of multifocal solar energy concentrator and which is also highly comparable to that of the aforecited types.

Another object of this invention is to provide a solar energy collector made of any suitable highly reflective material and multifocally constructed that effectively reflects more sunbeam and having a range that far exceeds that of the aforecited concentrators which is therefore suitable for a wider field of applications.

A further object of this invention is to provide a solar energy concentrator which is adapted and highly recommended for household purposes, and in the industry, agriculture and service sectors.

These and other objects will be fully appreciated after reading and studying the following detailed description of the appended drawings which form part of this specification and wherein reference numerals designates to same parts throughout.

In the drawings:

Figure 1 is a top view of one embodiment of this solar energy concentrator in accordance with this invention.

Figure 2 is a cross-sectional view of the embodiment shown in Figure 1 and taken generally along line 2-2 of Figure 1.

Figure 3 is a top view of another embodiment of this solar energy concentrator.

Figure 4 is a cross-section view taken generally along line 4-4 Figure 3.

Figure 5 is a top view of still another embodiment of the solar energy concentrator in accordance with this invention.

Figure 6 is a cross-sectional view taken generally along line 6-6 of Figure 5.

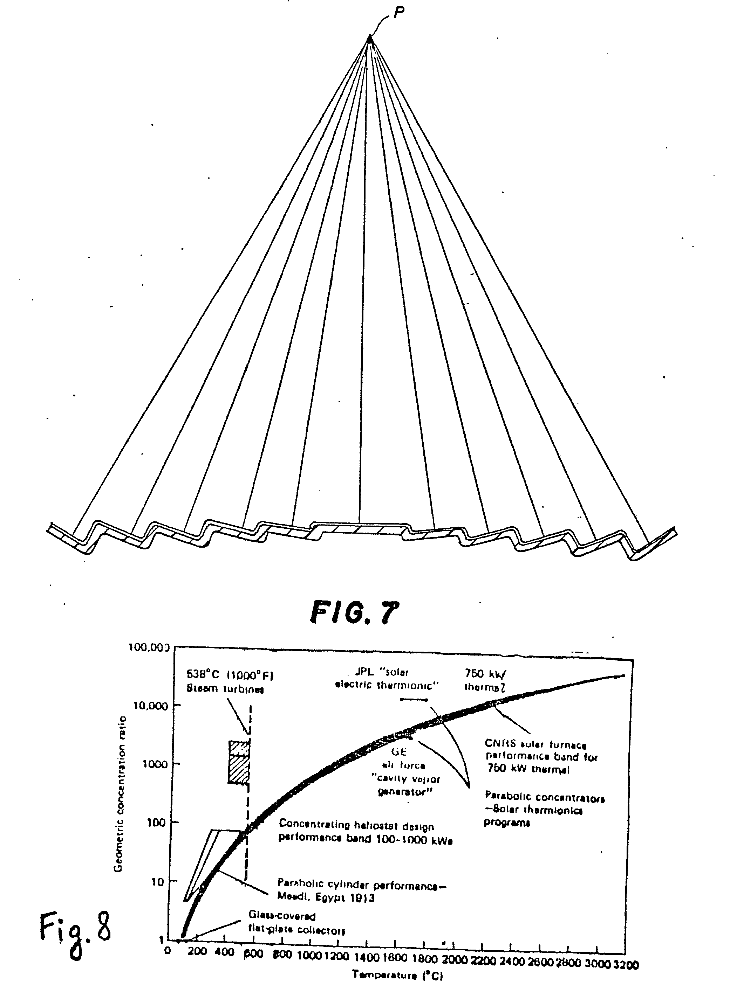

Figure 7 is a cross-sectional view of the present invention illustrating in phantom lines the focal point of reflection.

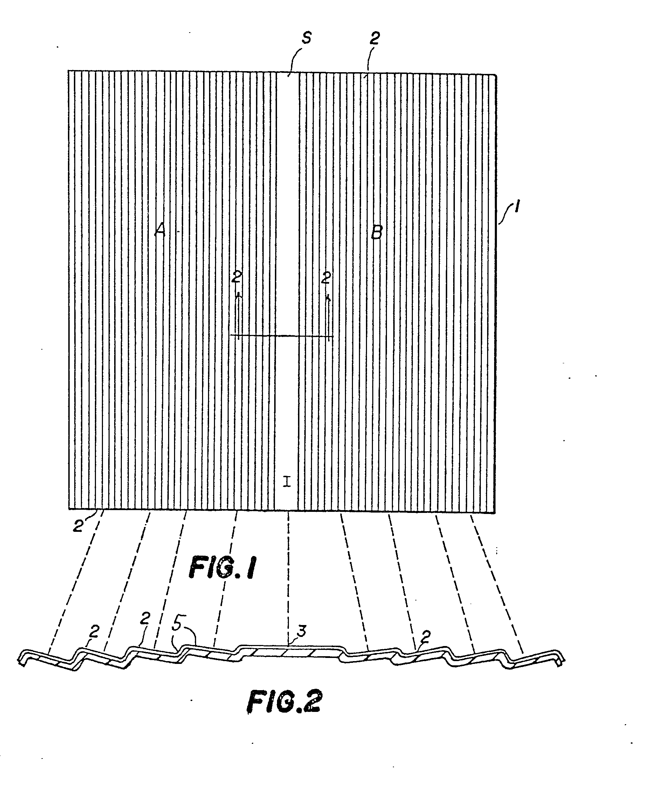

As shown in Figures 1 and 2 is the linear type embodiment of this invention.

This embodiment of the solar energy concentrator 1 consist of a plurality of horizontally disposed and laterally arranged narrow inclined strips 2 extending outwardly from both sides of a narrow middle strip 3. These plurality of inclined strips have highly reflective polished finish surfaces and each having a predetermined angle or inclination with reflective surfaces adapted to reflect multifocally solar energy to a line L above the narrow intermediate strip S. As shown there are two groups A and B of said narrow inclined areas disposed on both sides of the intermediate area I and facing towards the intermediate strip S.

At the line L maybe placed any suitable elongated heat absorbing device for utilizing the heat generated.

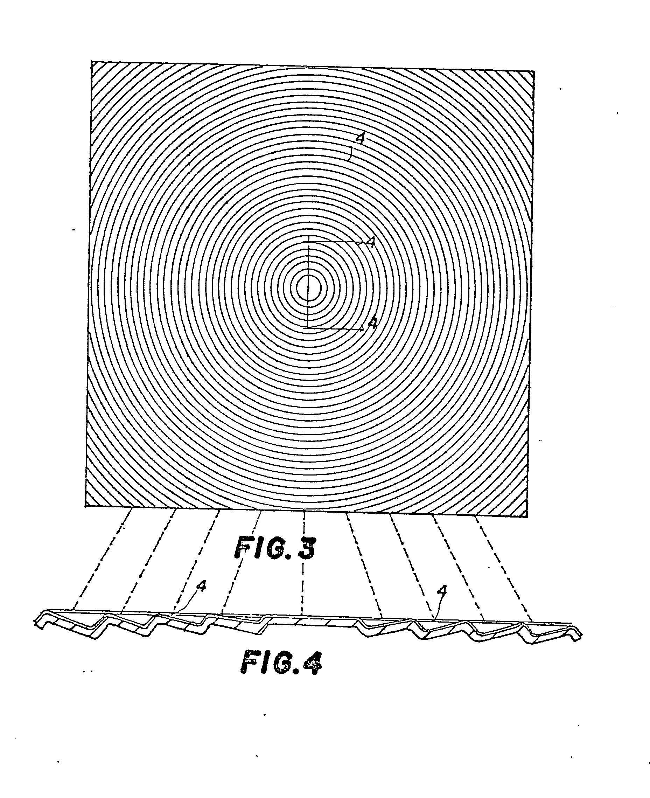

Another embodiment is shown in Figures 3 and 4. This embodiment is of the concentric type. The inclined narrow areas are horizontally disposed and in the form of concentric strips 4 and the inclinations of which are adapted to multifocally reflect the solar energy towards a point P above the center of the concentric strips. The inclined concentric narrow strips have multifocal reflective surfaces which may be a well polished or reflective lining or coating 5.

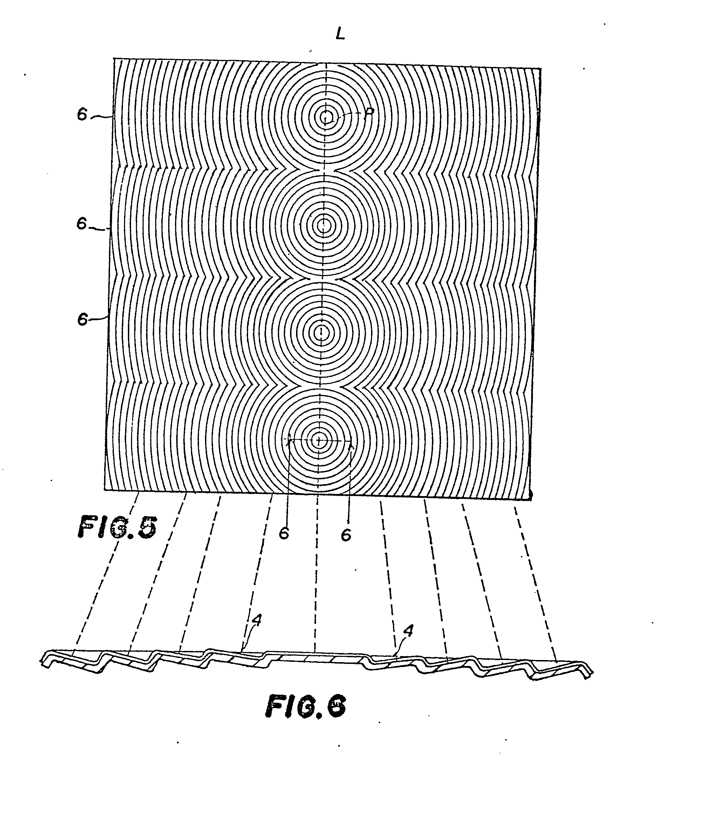

As shown in Figures 5 and 6 the inclined reflective strips consists actually of several (6) sets of concentric/arcs having a middle section of (4) concentric circular strips/the center of which are disposed in a straight line.

An example of an experiment made on one of the present concentrator showed the following results:

Physical features of the present concentrator:

| | |
|---|---|
| Diameter of the reflector | = 40 cm |
| Area of the reflector | = 1256.64 cm$^2$ |
| Reduction in area caused by shadow | = 150 cm$^2$ |
| Effective area of reflector | = 1106.64 cm$^2$ |
| Area of focus | = 50.2656 cm$^2$ |
| Geometric concentration ratio | = $\dfrac{1106.64}{50.2656}$ |
| | = 22 |

The geometric concentration ratio is the ideal concentration ratio of the collector. With a geometric concentration ratio of 22, the achievable temperature range falls between 200°C to 300°C.

Typical temperature achievable by concentrating solar collectors are given in Popular Science Magazine, as shown in Fig. 8.

While the present concentrator can achieve intermediate range temperatures between 200°C to 300°C still higher temperature can be obtained by improving its concentration ratio of 22. Higher temperatures yield more useful energy, for example in driving steam turbines for electricity generation.

## Claims

1. A multifocal solar energy concentrator comprising a plurality of horizontally and laterally disposed narrow strips/(2) each having predetermined angle or inclination with reflective surfaces, said narrow inclined surfaces adapted to reflect multifocally solar energy to an area of concentration spaced upwardly of said inclined strips, which could be used or adapted to all types of solar devices.

2. A multifocal solar energy concentrator as defined in Claim 1 wherein the narrow inclined strips with reflective surfaces are a plurality of laterally disposed linear strips (2).

3. A multifocal solar energy concentrator as defined in Claim 1 wherein the narrow inclined strips with reflective surfaces are a plurality of concentric strips (4).

4. A multifocal solar energy concentrator as defined in Claim 1 wherein the narrow inclined strips with reflective surfaces are several sets of concentric arcs/(6) each set of concentric arcs consisting of a middle section of concentric circular strips/(4) and the center of said sets of concentric arcs are disposed in a straight line.

114

FIG.1

FIG.2

2/4

FIG. 3

FIG.4

314

L

FIG.5

FIG.6

0053840

4/4

P

FIG. 7

FIG. 7

Fig. 8

0053840

European Patent
Office

Application number

EP 81110278.9

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| X | GB – A – 2 015 188 (MINNESOTA)<br>* Fig. 1; page 2, lines 63–88 *<br>–– | 1,2 |
| X | CH – A – 600 353 (STIFFLER)<br>* Totality *<br>–– | 1,2 |
| Y | US – A – 3 203 306 (LEFFERTS)<br>* Totality *<br>–– | 1–4 |
| Y | US – A – 3 125 091 (SLEEPER)<br>* Fig. 11 *<br>–– | 1–4 |
| Y | FR – A – 2 291 506 (NORTHRUP)<br>* Fig. 3,9,10; page 17, line 16 – page 18, line 15 * .<br>& AU–A1–86 568/75<br>–––– | 1–4 |

**CLASSIFICATION OF THE APPLICATION (Int. Cl. 3)**

F 24 J 3/02

G 02 B 3/08

**TECHNICAL FIELDS SEARCHED (Int.Cl. 3)**

F 24 J

G 02 B

H 01 L

H 01 Q

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

X

| Place of search | Date of completion of the search | Examiner |
|---|---|---|
| VIENNA | 01–03–1982 | SCHMIDT |

EPO Form 1503.1 06.78